# EUROPÄISCHE PATENTSCHRIFT

(11) **EP 2 017 510 B1**
(45) Veröffentlichungstag und Bekanntmachung des Hinweises auf die Patenterteilung: **23.03.2011**
(21) Anmeldenummer: 07011448.3
(22) Anmeldetag: 12.06.2007
(51) Int. Cl.: F16K 1/22, F16K 27/02, F02D 9/10, F02D 9/02

(54) **Gasführendes Drehklappenventil**
Gas fed revolving flap valve
Vanne à papillon pour gaz

(43) Veröffentlichungstag der Anmeldung: 21.01.2009
(73) Patentinhaber: Hofmann, Arno, 63571 Gelnhausen (DE)
(72) Erfinder: Hofmann, Arno, 63571 Gelnhausen (DE)
(74) Vertreter: Quermann, Helmut

(56) Entgegenhaltungen:
- EP-A- 1 498 596
- DE-A1- 10 320 743
- DE-A1- 10 324 398
- GB-A- 1 563 487
- US-B1- 6 918 374

## Beschreibung

Die Erfindung betrifft ein Drehklappenventil zum Führen von Gas, insbesondere zur Verwendung in einer Frischgas- oder Abgasleitung einer Wärmekraftmaschine, mit einem Antrieb, einer schwenkbar in einem Gehäuse gelagerten Welle und einer mit der Welle verbundenen Drehklappe zum Verschließen und Öffnen eines Kanalquerschnitts des Gehäuses, wobei der gebildete Drehklappen-Wellen-Verbund als mittels des Antriebes antreibbarer Oszillator ausgebildet ist und als Energiespeicher mindestens eine Feder dient.

Drehklappenventile werden zunehmend in Frischgas- und Abgasleitungen von Wärmekraftmaschinen eingesetzt, um den Gasmassenfluss zu steuern.

Drehklappenventile, die als schwingender Oszillator ausgebildet werden, können sehr hohe Taktfrequenzen über 200 Hertz erreichen. Diese Schaltfrequenzen erlauben es, z. B. beim Gaswechsel von Verbrennungsmotoren, das Drehklappenventil ein- oder mehrmals während eines Arbeitsspieles zu öffnen bzw. zu schließen. Damit ergibt sich eine hohe Freizügigkeit in der Gestaltung des Ladungswechsels.

Grundsätzlich ist die Verwendung oszillierender Drehklappenventile im Frischgasbereich, im Abgasbereich und auf Mischstrecken von Frisch- und Abgasleitungen sinnvoll. Die Anzahl der Drehklappenventile im Frischgasbereich kann unterschiedlich ausfallen. Es ist möglich für jedes Einlassventil ein Drehklappenventil vorzusehen, ein Drehklappenventil je Zylinder einzusetzen oder mehrere Zylinder über ein Drehklappenventil zu versorgen.

Ein Drehklappenventil der eingangs genannten Art, das in einer Frischgasleitung einer Wärmekraftmaschine Verwendung findet, ist aus Zeitschrift MTZ, 12/2001, Seiten 998 bis 1009 unter dem Titel "Impulsaufladung und Laststeuerung von Hubkolbenmotoren durch ein Lufttaktventil" bekannt. Dort ist unter 4. ein Prototyp für Motorversuche beschrieben und im Bild 4 veranschaulicht, bei dem die Eigenfrequenz des schwingungsfähigen Feder-Masse-Systems von einer in der Ankerwelle untergebrachten Torsionsfeder sowie den Trägheitsmomenten von einem Schwenkanker und einer Klappe bestimmt wird. Die Bewegung des Schwingsystems wird dabei durch zwei unabhängig voneinander schaltbare Umkehrhubmagnete gesteuert, zwischen denen der Schwenkanker federunterstützt schwingt.

Weitere Drehklappenventile, insbesondere für den frischluftseitigen Einsatz, sind aus der DE 103 19 168 A1 sowie aus ATZIMTZ-Fachbuch, "Ottomotor mit Direkteinspritzung", Sonderdruck Lufttaktventil, ISBN 978-3-8348-0202-6, veröffentlicht im April 2007 bekannt.

Die aus dem genannten Stand der Technik bekannten Ventilbauarten sitzen ausnahmslos im Ansaugbereich eines jeden Zylinders, um den Frischgasmassenstrom entsprechend dem Schaltzustand des Ventils freizugeben oder abzusperren. Mit einer solchen Ventilanordnung lassen sich thermodynamisch mehrere Ladungswechselvorteile ausführen:
1. Reduzierung von Pumpverlusten bei Teillast (Miller- bzw. Atkinson-Prozess),
2. Schwingrohraufladung unabhängig von der Motordrehzahl (Impulsaufladung, Schatz),
3. Temperaturabsenkung des Verbrennungsprozesses bei Voillast (Miller- bzw. Atkinson-Prozess),
4. Temperaturanhebung im Saughub (Wärmeladung, Schatz),
5. Abgasrückführung.

Um die thermodynamische Güte der oben genannten Ladungswechselvorteile zu maximieren, ist, neben einer geringen Leckage der Drehklappenventile in geschlossenem Zustand, die zylinderkopfnahe Einbauposition der Drehklappenventile, d. h. die Reduzierung des Volumens zwischen Motoreinlassventilen und Drehklappenventilen ausschlaggebend, da die Pumpverluste in diesem sogenannten Schadraum thermodynamische Irreversibilitäten darstellen.

Die genannten Ventilbauarten besitzen mehrere konstruktive Gemeinsamkeiten:
1. Der Antrieb der Drehklappen erfolgt elektromagnetisch.
2. Der elektromagnetische Antrieb liegt außerhalb des gasdurchströmten Ventilraums.
3. Der Energiespeicher (Feder) liegt außerhalb des gasdurchströmten Ventilraums, konkret in Art der gekapselten Torsionsfeder.

Die erörterten Ventilbauarten besitzen den Nachteil einer großen axialen Bauhöhe. Ausgehend von einem notwendigen Fließquerschnitt im Klappenbereich des Ventils, der zumindest dem Kanalquerschnitt am Zylinderkopf entsprechen muss, sieht man, dass eine zueinander koaxiale Anbindung der Ventile an Zylinderköpfen von Reihenmotoren hinsichtlich der heute üblichen Zylinderabstände kaum möglich ist. Ebenfalls behindert die Verwendung von Torsionsfedern mit kreisrundem Querschnitt eine kurze axiale Bauart, da praxisnahe Federrückstellmomente und Torsionswinkel nur mit Federlängen zu erreichen sind, die den Zylinderabstand übertreffen.

Die senkrechte, achsparallele Montage von Drehklappenventilen auf Reihenmotoren stößt ebenso auf Probleme, da eine zylinderkopfnahe Anbauposition eine Kollision entweder zwischen dem elektromagnetischen Antrieb und dem Nockenwellenschaft des Zylinderkopfs verursacht oder ein am Drehklappenventil nach unten verlagerter Antrieb Überschneidungen mit den oftmals zwischen den Einlassventilen unterhalb des Einlasskanals montierten Einspritzventilen und Kraftstoffgalerien hervorruft.

Auch kann ein nach oben gerichteter elektromagnetischer Antrieb die Motorbauhöhe unzulässig erhöhen, was bei PKW-Frontmotoren hinsichtlich der geforderten Knautschzone zwischen Motor und Motorhaube zu berücksichtigen ist.

Die größten thermodynamischen Vorteile lassen sich mit frischgasseitigen Drehklappenventilen durch die Anordnung mindestens eines Drehklappenventils pro Zylinder nahe an den Motoreinlassventilen umsetzen. Um den beengten Platzverhältnissen nahe des Zylinderkopfes gerecht zu werden, sollte die axiale Baulänge des Drehklappenventils bei den geforderten Fließquerschnitten kleiner als der Zylinderabstand sein, um eine vorteilhafte zueinander koaxiale Anordnung der Drehklappenventile am Zylinderkopf zu ermöglichen.

Ein Drehklappenventil dieser Art ist aus der DE 103 24 398 A1 bekannt.

Vor diesem Hintergrund ist es Aufgabe der vorliegenden Erfindung ein Drehklappenventil der eingangs genannten Art so weiterzubilden, dass dieses eine geringe axiale Bauhöhe aufweist.

Gelöst wird die Aufgabe bei einem Drehklappenventil der eingangs genannten Art dadurch, dass die Feder sich zumindest teilweise im gasführenden Innenraum des Ventilgehäuses befindet. Die Feder kann sich durchaus vollständig im gasführenden Innenraum des Gehäuses befinden.

Bevorzugte Weiterbildungen der Erfindung und deren Vorteile ergeben sich aus den Unteransprüchen, der nachfolgenden Beschreibung der Figuren sowie den Figuren selbst. Es wird hierbei bemerkt, dass alle Einzelmerkmale und alle Kombinationen von Einzelmerkmalen erfindungswesentlich sind.

In den Figuren ist die Erfindung einerseits für ein Drehklappenventil ohne Gaskanäle, andererseits für das Drehklappenventil mit Gaskanälen beschrieben, ohne auf dieses Ausführuragsbeispiel beschränkt zu sein. Unter diesem Aspekt sind die vielfältigen Erläuterungen dieses Drehklappenventils und dessen Weiterbildungen in der Figurenbeschreibung zu verstehen.

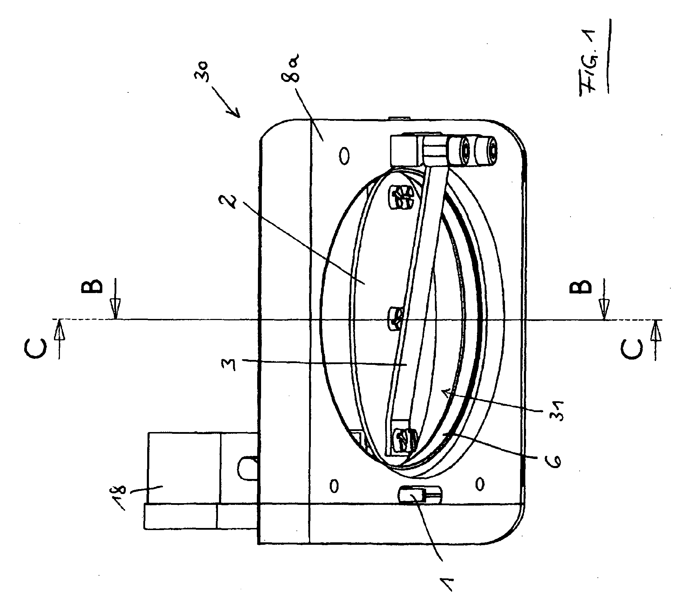

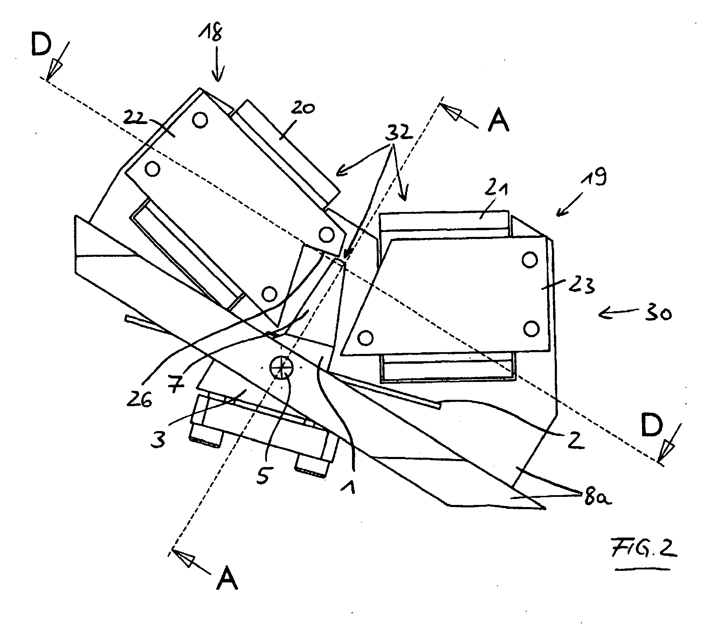

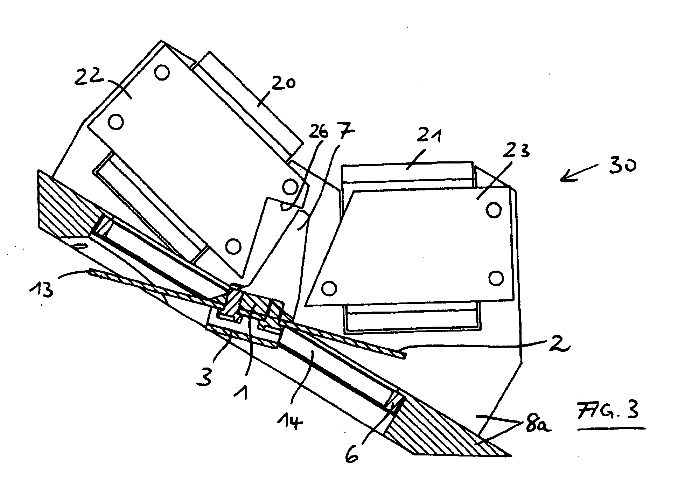

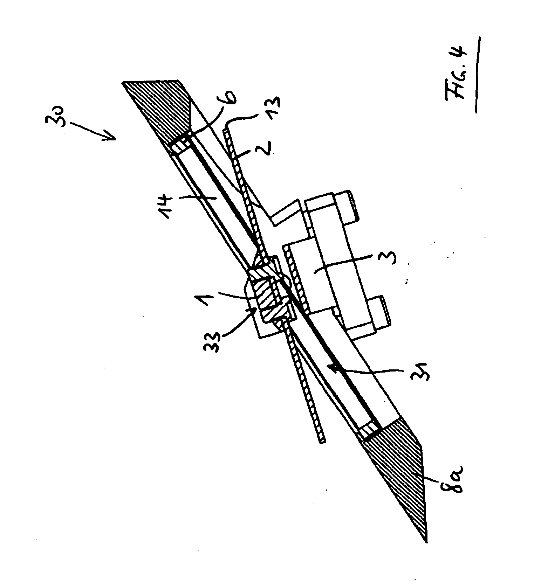

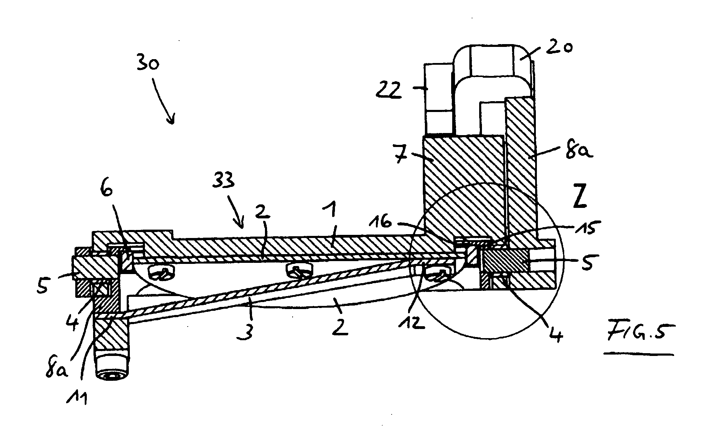

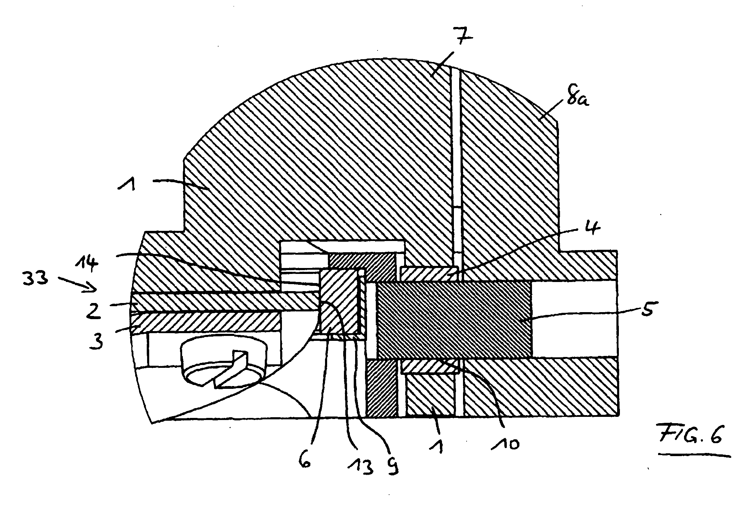

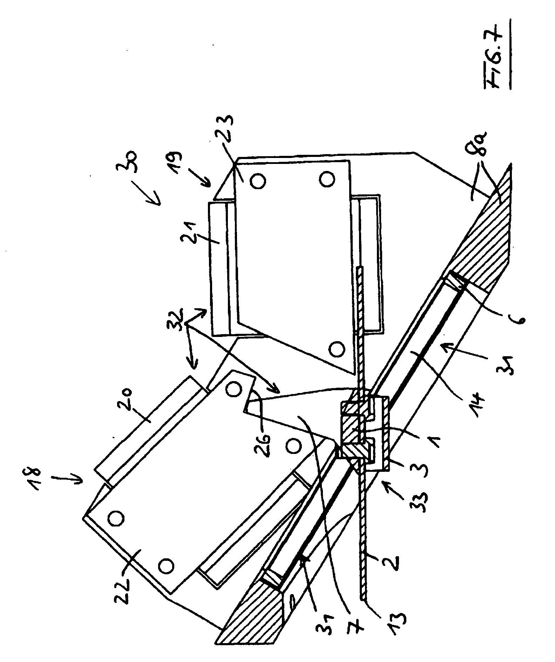

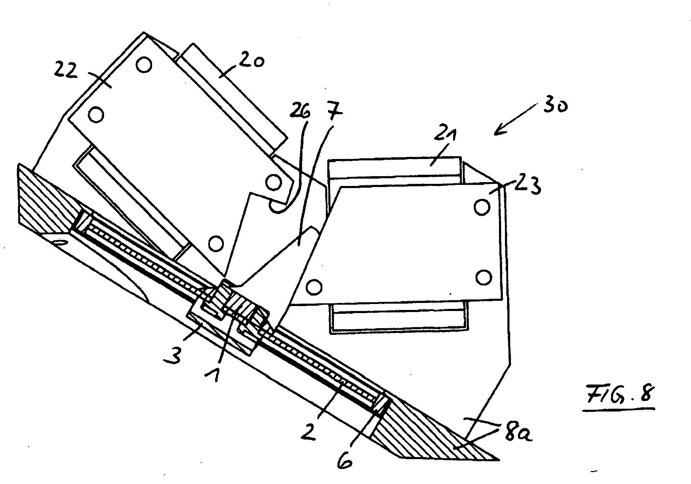

Die Figuren 1 bis 8 stellen das Drehklappenventil ohne Gaskanäle und die Figuren 9 bis 14 das Drehklappenventil mit Gaskanälen dar. Im Detail zeigen:
- Fig. 1: das Ventil von vorne in Strömungsrichtung, bei in Mittenposition befindlicher Klappe und entspannter Feder,
- Fig. 2: eine Ansicht des Ventils von der linken Seite, bei in Mittenposition befindlicher Klappe,
- Fig. 3: einen Schnitt gemäß der Linie B-B in Fig. 1 (Klappe in Mittenposition),
- Fig. 4: einen Schnitt gemäß der Line C-C in Fig. 1 (Klappe in Mittenposition),
- Fig. 5: einen Schnitt gemäß der Line A-A in Fig. 1 (Klappe in Mittenposition),
- Fig. 6: eine Detailansicht Z aus Fig. 5, entlang der Schnittlinie A-A in Fig. 2,
- Fig. 7: einen Schnitt gemäß der Linie B-B in Fig. 1 (veranschaulicht für die Stellung der Klappe in Offenposition),
- Fig. 8: einen Schnitt gemäß der Linie B-B in Fig. 1 (veranschaulicht für die in geschlossener Position befindliche Klappe),
- Fig. 9: das Ventil mit den Gaskanälen, von vorne in Strömungsrichtung gesehen, bei in Mittenposition befindlicher Klappe und entspannter Feder,
- Fig. 10: eine Ansicht von Ventil- und Gaskanälen von der linken Seite,
- Fig. 11: einen Schnitt gemäß der Linie B-B in Fig. 9 (Klappe in Mittenposition),
- Fig. 12: einen Schnitt gemäß der Linie C-C in Fig. 9 (Klappe in Mittenposition),
- Fig. 13: einen Schnitt gemäß der Linie A-A in Fig. 10 (Klappe in Mittenposition),
- Fig. 14: einen Schnitt gemäß der Linie D-D in Fig. 10 (Klappe in Mittenposition).

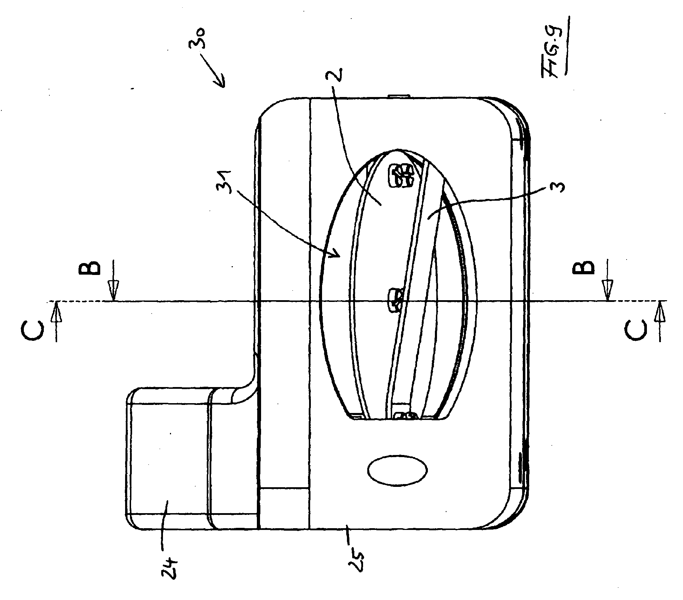

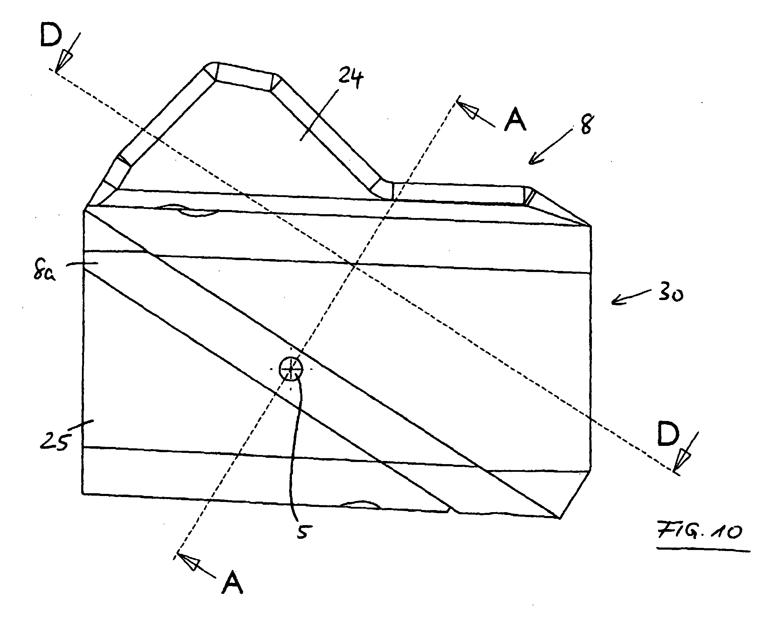

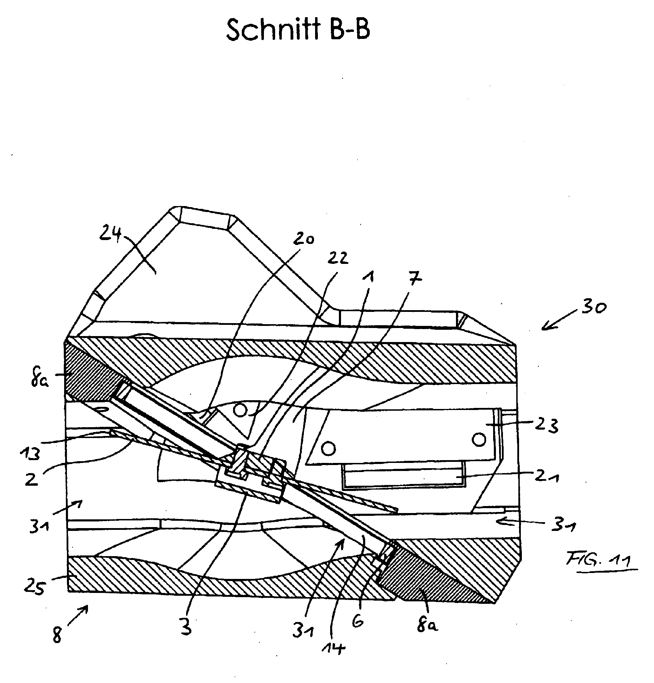

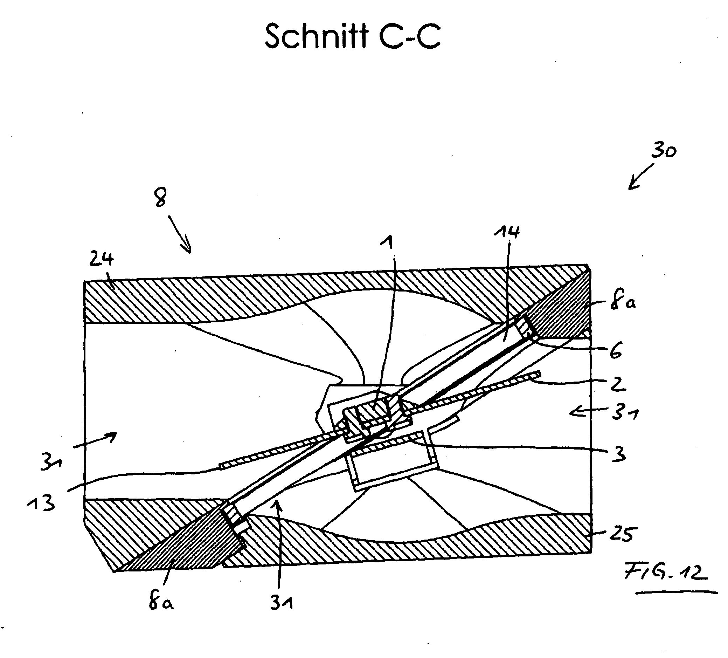

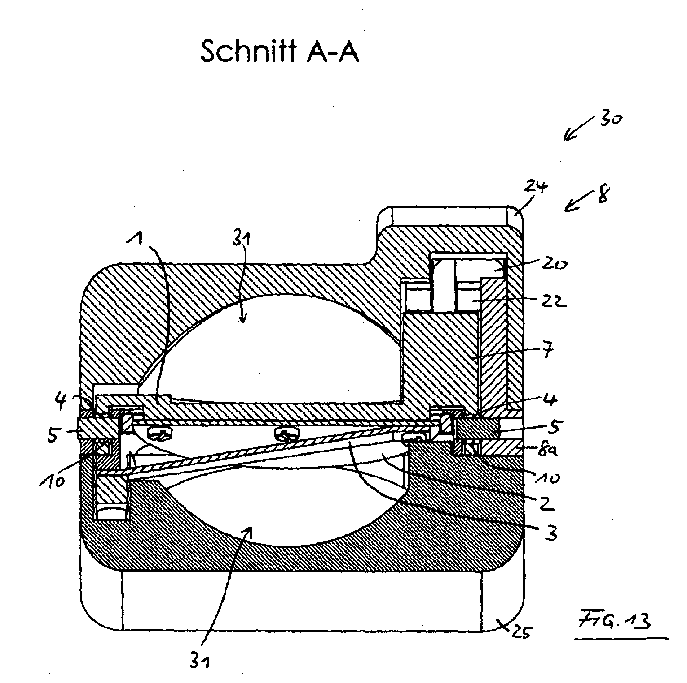

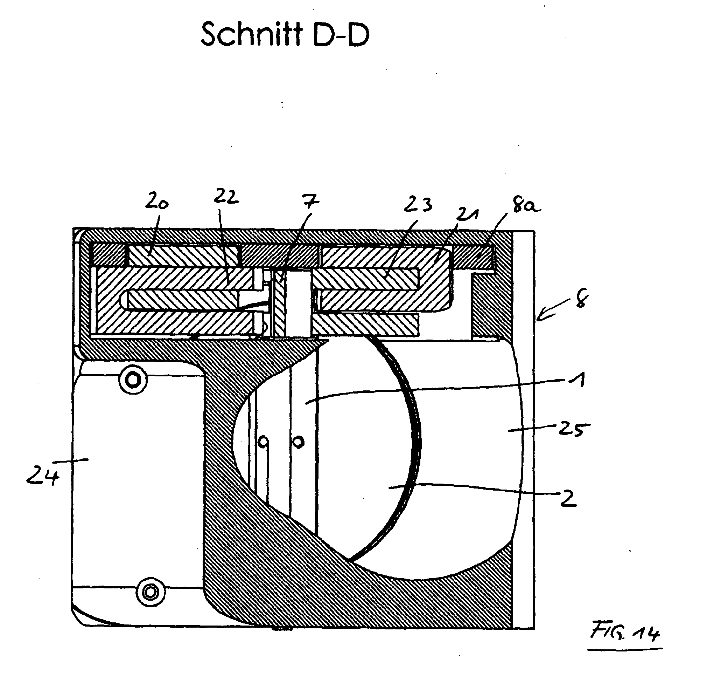

An der drehbaren Welle 1 ist eine Drehklappe 2 befestigt, die gemeinsam in einem Gehäuse 8 über mindestens zwei Lagerstellen 10 rotieren können. Das Gehäuse 8 weist mindestens den gezeigten, im Ausführungsbeispiel flach gestalteten Gehäuseträger 8a auf und kann zusätzlich die in den Figuren 9 bis 14 gezeigten, mit dem Gehäuseträger 8a verbundenen Elemente 24, 25 des angeschlossenen Leitungssystems, insbesondere des angeschlossenen Ansaugsystems aufweisen. Der Innenraum des Gehäuses 8 bzw. Gehäuseträgers 8a stellt hierbei den gasführenden Innenraum 31 des Ventils 30 dar.

Eine Feder 3 ist mit einem Federende 12 an dem durch die Drehklappe 2 und die Welle 1 gebildeten Drehklappen-Wellen-Verbund 33 befestigt und am anderen Federende 11 mit dem Gehäuseträger 8a verbunden. Unter Drehung des Drehklappen-Wellen-Verbundes 33 erfährt die Feder 3 eine Deformation, die zu einem entsprechenden Federrückstellmoment führt. Die Drehbewegung des Drehklappen-Wellen-Verbundes 33 ist in beide Richtungen begrenzt, wobei vorteilhafterweise den maximalen Drehauslenkungen die Schließposition bzw. die Offenposition des Drehklappenventils 30 zuzuordnen sind.

Die Abdichtung des Ventils 30 in Schließposition erzeugt vorteilhafterweise eine durch die kreisförmige Außenumfangsfläche 13 der Klappe 2 und Innenwand des Gehäuseträgers 8a gebildete Spaltdichtung.

Aufgrund des in der Praxis notwendigen sehr engen Spaltes von wenigen 1/100 mm zwischen Außenumfangsfläche 13 der Klappe 2 und des Gehäuseträgers 8a hinsichtlich der üblichen Fertigungstoleranzen aller Bauteile und der Lagerspiele, die in Summe die Dichtspalthöhe oft übersteigen, wird im Gehäuseträger 8a im Bereich der Schließposition des Ventils 30 ein Dichtring 6 eingesetzt. Der Dichtring 6 wird vorteilhafterweise in einer offenen Nut 15 des Gehäuseträgers 8a durch einen Klemmring 9 gegen axiales Verschieben gesichert. Dieser Dichtring 6 bildet mit seiner Innenumfangsfläche 14 und der Außenumfangsfläche 13 der Klappe 2 den geforderten Dichtspalt. Der im Gehäuseträger 8a mit Radialspiel behaftete Dichtring 6 wird bei der Montage des Ventils 30 in Schließposition über die Klappe 2 zentriert und findet somit seine Position im Gehäuseträger 8a unter Egalisierung aller Lagetoleranzen. Nach erfolgter Montage kann der Dichtring 6 einerseits im Gehäuseträger 8a in der Nut 15 radial frei beweglich bleiben, da die Klappe 2 bei jedem Schließvorgang den Dichtring 6 erneut zu zentrieren vermag. Der Dichtring 6 dichtet dabei mit seinen Seitenflächen 16 zum Gehäuseträger 8a beispielsweise durch Anlagedichtung ab.

Andererseits kann der Dichtring 6 nach erfolgter Zentrierung im Gehäuseträger 8a durch die Klappe 2 mit dem Gehäuse 8 fest verbunden und abgedichtet werden, was beispielsweise durch Verkleben und/oder Verpressen usw. erreicht werden kann. Die Materialien von Klappe 2 und Dichtring 6 sollten ähnlichen Wärmedehnungskoeffizienten besitzen, um die Dichtspalthöhe über den Einsatztemperaturbereich des Ventils 30 geringen Schwankungen zu unterziehen. In diesem Zusammenhang wird auf die EP 1 498 596 B1 verwiesen.

Neben der geringen Reibung und nahezu Verschleißfreiheit einer Spaltdichtung, sind als weitere Vorteile dieses Dichtungssystems die geringe akustische Schallanregung (kein Körperschall, nur Luftschall) und die anschlaglose Dichtwirkung zu nennen, die besonders in Verbindung mit einem Anschlag behafteten Antrieb zur Geltung kommt, um den kompletten Feder-Masse-Schwinger nicht durch zwei Anschläge (Klappe und Antrieb) kinematisch überzubestimmen.

Die Feder 3 kann aus korrosionsbeständigem Material, wie Edelstahl, Bronze, Nimonic, Faserverbundstoffen usw. hergestellt werden. Eine besonders vorteilhaft Federgestaltung ist die im Ausführungsbeispiel gezeigte Blattfeder 3. Die Blattfeder erfährt unter Deformation eine Torsions-Biege-Beanspruchung, die im Vergleich zu konzentrisch wirkenden Torsionsfedern mit annähernd kreisrundem Querschnitt eine wesentliche Verkürzung der axialen Baulänge der Feder erlaubt, unter der Bedingung, identischer Torsionswinkel, Materialien und Maximalspannungen. Die Form der Feder, d. h. deren Profilverlauf und Wölbung bzw. Schränkung kann sehr freizügig gestaltet werden, um gleichzeitig auftretende Torsions- und Biegebeanspruchungen aufnehmen zu können, ohne die maximalen Materialspannungen zu überschreiten. Die Feder 3 lässt sich preiswert aus Bandstahl ablängen und in Form pressen. Die flache Bauart der Blattfeder minimiert deren Strömungswiderstand im Kanal und erlaubt die Verwendung einer preiswerten ebenen Drehklappe 2, welche vorzugsweise aus leichten Werkstoffen, wie Faserverbundmaterialien, Kunststoffen oder aber auch aus Metallen, beispielsweise aus Plattenmaterial gestanzt oder geschnitten werden kann. Die Blattfedergeometrie in Verbindung mit einer ebenen Drehklappe 2 kann problemlos auf die im Kanalbereich des Ventils 30 eben gehaltene Welle 1 aufgeschraubt oder genietet werden. Hierin liegt ein entscheidender Vorteil gegenüber Drehklappenventil-Konstruktionen mit konzentrischer, ummantelter Drehstabfeder, die eine kostenintensive Hohlwelle erfordern, keine Planfläche auf der Welle zur Klappenbefestigung bieten und eine Klappenwölbung oder -unterbrechung in Achsnähe bedingen, um die Drehstabfeder zu umlaufen.

Die Geometrie der Außenumfangsfläche 13 der Klappe 2 bzw. die der Innenumfangsfläche 14 des Dichtrings 6 / Gehäuseinnenfläche kann beliebig geformt werden, da die Dichtwirkung des gebildeten Dichtspalts unabhängig von dessen Krümmung ist. Vorteilhaft ist jedoch die Ausbildung der Klappe 2 mit einer kreisförmigen Außenumfangsfläche 13, da diese kostengünstig spanend auf Passung gedreht, geschliffen, gehont usw. werden kann. Durch axiales Stapeln mehrerer Klappen 2 für die mechanische Endbearbeitung können die Fertigungskosten pro Klappe erheblich gesenkt werden. Entsprechende Kosteneinsparungen lassen sich bei der Herstellung des Dichtrings 6 umsetzen, wenn der Dichtring aus einem langen Rohr abgestochen wird, das zuvor in seiner Innenumfangsfläche 14 auf Passung gedreht, feingebohrt, gehont usw. wurde, da die kostenintensive Endbearbeitung der Dichtfläche auf mehrere Dichtringe umgelegt werden kann.

Die Lagerstellen 10 können aus Wälz- oder auch aus Gleitlagern bestehen. Sehr kostengünstig kann die Lagerung durch im Gehäuseträger 8a verpresste Lagerzapfen 5 und in die Welle 1 eingepresste Gleitlager 4 ausgeführt werden. Die Gleitlagerung, als Trockengleitlagerung ausgebildet, besitzt weiterhin Vorteile hinsichtlich des Verzichts auf jegliche Lagerabdichtung. Der in heutigen Verbrennungsmotoren häufig beigemischte Anteil von Abgas zum Frischgas kann mit seinen Bestandteilen wie Ruß (Kohlenstoff) und Kondensat die Schmierung der Lagerstellen positiv beeinflussen.

Der gasführende Bereich des Ventils 30 kann mehrteilig ausgebildet sein. Das Gehäuse 8, im Ausführungsbeispiel der Gehäuseträger 8a, übernimmt dabei die Lagerung des Drehklappen-Wellen-Verbunds 33 und nimmt den eventuell vorhandenen Dichtring 6 auf. Des Weiteren kann auch der nachstehend beschriebene Antrieb des Oszillators ganz oder teilweise auf dem Gehäuseträger 8a montiert werden. Die flache Ausführbarkeit des Gehäuseträgers erlaubt eine problemlose Zugänglichkeit für die Montage der auf diesem zu montierenden Einzelbauteile. Mit dem Gehäuseträger 8a können wie im Ausführungsbeispiel gezeigt, Kanalformstücke 24, 25 gasdicht befestigt werden, die Bestandteil des Gehäuses 8 bilden und die Gasführung zum Gehäuseträger 8a hin bzw. von diesem weg führend gestalten und außerdem noch den Antrieb des Ventils 30 aufnehmen bzw. integrieren können.

Thermodynamisch ist ein schnelles Öffnen bzw. Schließen des Ventils 30 erwünscht (Steigerung der Zeitquerschnitte). Da aus der ruhenden Schließposition des Ventils 30 heraus die Klappe 2 stetig beschleunigt bzw. zu dieser hin verzögert werden muss, ist die sich daraus ergebende langsame Freigabe des Strömungsquerschnitts thermodynamisch nicht unbedingt von Vorteil. Wird jedoch die Innenumfangsfläche des Gehäuseträgers 8a bzw. die Innenumfangsfläche 14 des Dichtrings 6 derart geformt, dass die Dichtspalthöhe sich nicht oder nur wenig in einem bestimmten Drehwinkel der Klappe 2 nahe der Schließposition ändert, so wird ein nennenswerter Gasmassenfluss auch beim anfänglichen Beschleunigen der Klappe 2 aus der Schließposition bzw. letztendlichen Verzögerungen zu dieser weitgehend unterdrückt. Die Klappe 2 öffnet somit den Kanalquerschnitt erst zu einem späteren Zeitpunkt ihrer Bewegung, dann allerdings mit einer höhere Winkelgeschwindigkeit. Dieser Effekt einer Vorsteuerung, der im Schließvorgang spiegelbildlich zum Öffnungsvorgang verläuft, reduziert bei gegebenem Klappendrehwinkel geringfügig den Strömungsquerschnitt, verringert jedoch erheblich die Zeitdauer zur Freigabe des verbleibenden gesamten Querschnitts. Thermodynamisch kann durch diese geometrische Maßnahme die strömungsmechanisch relevante Öffnungs- bzw.

Schließzeitspanne des Ventils erheblich verkürzt werden, womit die Zeitquerschnitte des Ventils beim Öffnen und Schließen entsprechend wachsen.

Der Antrieb des Drehklappenventils 30 kann mechanisch, pneumatisch, hydraulisch und auch elektromagnetisch oder in Kombination oben genannter Antriebsmöglichkeiten erfolgen. Der Antrieb wirkt auf die Welle 1 bzw. auf eine hier nicht dargestellte Verlängerung der Welle 1. Sehr vorteilhaft gestaltet sich ein elektromagnetischer Antrieb 32 über zwei Elektromagnete 18, 19, die auf einen mit der Welle 1 verbundenen Anker 7 wirken und den Anker 7, je nach Bestromung der Elektromagnete 18 bzw. 19, bis auf Anlage an die Polfläche eines jeweiligen Magneten anziehen. Die Elektromagnete 18, 19 können preiswert als U-Magnete hergestellt werden und besitzen ferromagnetische Statoren 22, 23 mit aufgeschobenen Spulen 20, 21. Zur Reduzierung von Wirbelströmen bei Magnetfeldänderung lassen sich die Statoren 22, 23 aus gestapelten, gegeneinander isolierten Blechen aufbauen. Der Anker 7 wird ebenfalls aus ferromagnetischem Material ausgeführt und kann vorteilhafterweise einteilig mit der Welle 1 aus Stahl hergestellt werden. Die Wellen-/Ankerherstellung kann kostengünstig in Guss-, Fließpress- oder Sintertechnologie usw. verlaufen. Durch unterschiedliche Formgebung der Statoren 22, 23 und/oder des Ankers 7 kann die Kraftwirkung der Elektromagnete 18, 19 auf den Anker 7 verändert werden, entsprechend einer Kennlinienbeeinflussung, wie es durch die Kontur 26 des Stators 22 veranschaulicht ist. Dadurch wird es möglich, bei bei gleichzeitiger Bestromung aller Spulen und Ankerposition in der Nulllage (Feder entspannt), den Anker in eine Vorzugsrichtung zu ziehen. Der Vorteil einer solchen Asymmetrie der Kraftwirkung liegt einerseits darin, den Anker 7 beim Start des Ventils 30 nicht unbedingt mit Resonanzfrequenz aufschaukeln zu müssen, um eine Endlage an einem Stator zu erreichen, sondern durch Kraftmomentenüberschuss den Anker 7 direkt an einen Stator anziehen zu können. Andererseits erlaubt die Kennlinienbeeinflussung mit nur einer Endstufe im Steuergerät des Ventils 30 auszukommen, unabhängig von der Anzahl der Elektromagnete.

Grundsätzlich liefern Anschlag behaftete elektromagnetische Aktoren bei identischer magnetischer Feldenergie höherer Haltekräfte zwischen Anker 7 und Statoren 22, 23 als anschlaglose Aktoren, die zwischen Anker und Stator einen Luftspalt belassen. Der Vorteil der anschlaglosen Aktoren liegt in der geringeren Geräuschentwicklung und der Verschleißfreiheit des Ankers und Stators. Werden Ventile für höchste Schaltfrequenzen ausgelegt, ist ein Anschlag behafteter Antrieb vorzuziehen. Sowohl Anschlag behaftete, als auch anschlaglose Antriebe können für das Ventil 30 verwendet werden.

Eine weitere Bauraumverringerung des Ventils 30 ergibt sich durch die Integration des Ankers 7 und der Elektromagnete 18 und 19 in dem gasführenden Innenraum 31 des Gehäuses 8. Der elektromagnetische Antrieb 32, wird strömungsmechanisch günstig in die Kanalwand des Gehäuses 8 eingelassen, steht aber in direktem Kontakt mit dem durch das Ventil strömenden Gas. Die Kanalformstücke 24, 25 übernehmen auch die gasdichte Kapselung des elektromagnetischen Antriebs 32 nach außen. Im Vergleich zu den eingangs zum Stand der Technik diskutierten Konstruktionen erfolgt hierdurch eine Verkürzung der axialen Baulänge des Ventils 30, da im oder am Gehäuse 8 des Ventils 30 kein separater Arbeitsraum für die elektromagnetischen Antrieb 32 vorgesehen werden muss, eine eventuelle Abdichtung zwischen gasführendem Innenraum 31 des Gehäuses 8 in dem Antriebsraum des elektromagnetischen Antriebs 32 entfällt und wegen der sich daraus ergebenden kurzen axialen Baulänge des Ventils 30 mit im gasführenden Innenraum 31 integrierten elektromagnetischen Antrieb 32 mit zwei Lagerstellen 10 pro Ventil 30 auszukommen ist.

Ein weiterer Vorteil des im gasführenden Innenraum 31 integrierten elektromagnetischen Antriebs 32 gegenüber einem externen elektromagnetischen Antrieb liegt in der akustischen Kapselung des elektromagnetischen Antriebs, da das Aufschlagen des Ankers 7 auf die Polflächen der Statoren 22, 23 aus Komfortgründen bei Fahrzeugmotoren als unangenehm empfunden wird. Der im gasführenden Innenraum 31 integrierte elektromagnetische Antrieb 32 besitzt somit Vorteile hinsichtlich eines Bauraumbedarfs, geringerer Reibleistung (Entfall von zusätzlichen Lagerstellendichtungen) und der akustischen Kapselung durch das Gehäuse 8 / Gehäuseträger 8a des Ventils 30, wobei das Gehäuse 8 ohnehin gasdicht ausgeführt werden muss und aus Festigkeitsgründen auch entsprechende Wandstärken zur Anbindung an den Motor bzw. das Saugmodul besitzen sollte, welche eine durch den elektromagnetischen Antrieb 32 verursachte Körperschallanregung weitgehend unterbinden kann.

Sofern vorstehend beschriebene technische Merkmale im Zusammenhang mit Bezugsziffern erörtert sind, sind diese Bezugsziffern lediglich dafür da, die Verständlichkeit des Textes zu erhöhen und dementsprechend beschränken solche Bezugsziffern die Interpretation des jeweiligen mit einer solchen Bezugsziffer versehenen Bauteils nicht.

## Patentansprüche

1. Drehklappenventil (30) zum Führen von Gas, insbesondere zur Verwendung in einer Frischgas- oder Abgasleitung einer Wärmekraftmaschine, mit einem Antrieb (32), einer schwenkbar in einem Gehäuse (8) gelagerten Welle (1) und einer mit der Welle (1) verbundenen Drehklappe (2) zum Verschließen und öffnen eines Kanalquerschnitts des Gehäuses (8), wobei der gebildete Drehklappen-Wellen-Verbund (33) als mittels des Antriebes (32) antreibbarer Oszillator ausgebildet ist und als Energiespeicher mindestens eine Feder (3) dient, wobei durch das Gehäuse (8) ein gasführender Innenraum (31) gebildet ist, **dadurch gekennzeichnet, dass** die Feder (3) sich zumindest teilweise im gasführenden Innenraum (31) des Gehäuses (8) befindet.

2. Ventil nach Anspruch 1, **dadurch gekennzeichnet, dass** die Feder (3) sich vollständig im gasführenden Innenraum (31) des Gehäuses (8) befindet.

3. Ventil nach Anspruch 1, **dadurch gekennzeichnet, dass** das Gehäuse (8) durch einen Gehäuseträger (8a), der den Drehklappen-Wellen-Verbund (33) aufnimmt, gebildet ist oder durch den Gehäuseträger (8a) und mindestens eine sich an diesen anschließende gasführende Leitung (24, 25) gebildet ist.

4. Ventil nach einem der Ansprüche 1 bis 3, **dadurch gekennzeichnet, dass** die Feder (3) als Torsions- oder Torsionsbiegefeder ausgelegt ist.

5. Ventil nach einem der Ansprüche 1 bis 4, **dadurch gekennzeichnet, dass** die Feder (3) mit einem Federende (12) an dem Drehklappen-Wellen-Verbund (33) befestigt ist und mit dem anderen Federende (11) mit dem Gehäuse (8), insbesondere dem Gehäuseträger (8a) verbunden ist.

6. Ventil nach Anspruch 5, **dadurch gekennzeichnet, dass** der Flächenschwerpunkt des Federendes (12) im Bereich dessen die Feder (3) an dem Drehklappen-Wellen-Verbund (33) befestigt ist, die Drehachse der Welle (1) schneidet bzw. nahe bei dieser liegt und das Federende (11), im Bereich dessen die Feder (3) mit dem Gehäuse (8), insbesondere dem Gehäuseträger (8a) verbunden ist, mit seinem Flächenschwerpunkt weiter von der Drehachse entfernt ist als das Federende (12) im Bereich dessen die Feder (3) mit dem Drehklappen-Wellen-Verbund (33) befestigt ist.

7. Ventil nach einem der Ansprüche 1 bis 6, **dadurch gekennzeichnet, dass** die Feder (3) als Blattfeder ausgebildet ist.

8. Ventil nach einem der Ansprüche 1 bis 7, **dadurch gekennzeichnet, dass** die Feder (3) einen variablen Federquerschnitt aufweist und/oder das Federquerschnittsprofil rechteckig, elliptisch oder polygonal ausgeführt und/oder die Feder (3) in sich gekrümmt bzw. verdreht ist.

9. Ventil nach einem der Ansprüche 1 bis 8, **dadurch gekennzeichnet, dass** im geschlossenen Zustand des Ventils (30) die Klappe (2) mit ihrer Außenumfangsfläche (13) und der Gehäuseinnenwand einen engen Drosselspalt bildet.

10. Ventil nach einem der Ansprüche 1 bis 7, **dadurch gekennzeichnet, dass** im geschlossenen Zustand des Ventils (30) die Klappe (2) mit ihrer Außenumfangsfläche (13) und der Innenumfangsfläche (14) eines Dichtrings (6) einen engen Drosselspalt bildet, wobei der Dichtring (6) fest oder beweglich im Gehäuse (8), insbesondere im Gehäuseträger (8a) eingelassen ist und zu diesem ebenfalls abdichtet.

11. Ventil nach einem der Ansprüche 1 bis 10, **dadurch gekennzeichnet, dass** die Klappe (2) eben ist und die Außenumfangsfläche (13) der Klappe (2) kreisförmig geformt ist.

12. Ventil nach einem der Ansprüche 1 bis 11, **dadurch gekennzeichnet, dass** die Feder (3) einen Dichtspalt zwischen Klappe (2) und Gehäuse (8), insbesondere Gehäuseträger (8a), bzw. Dichtring (6) nicht schneidet oder unterbricht.

13. Ventil nach einem der Ansprüche 1 bis 12, **dadurch gekennzeichnet, dass** die Klappe (2) an der Welle (1) in einer Position befestigt ist, der Art, dass bei Druckdifferenz am geschlossenen Ventil (30) keine Kraftmomente von der Klappe (2) in die Welle (1) eingeleitet werden.

14. Ventil nach einem der Ansprüche 1 bis 13, **dadurch gekennzeichnet, dass** Klappe (2) und Welle (1) einteilig ausgeführt sind.

15. Ventil nach einem der Ansprüche 1 bis 14, **dadurch gekennzeichnet, dass**, im Bereich der Schließposition des Ventils (30), die Innenkontur des Gehäuses (8), insbesondere Gehäuseträgers (8a), bzw. die Innenumfangsfläche (14) des Dichtringes (6) sich der Bewegungsbahn der Außenumfangsfläche (13) der Klappe (2) anschmiegt und somit der freie Öffnungsspalt zwischen Klappe (2) und Gehäuse (8), insbesondere Gehäuseträgers (8a), bzw. Klappe (2) und Dichtring (6) in der Nähe der Schließposition stark reduziert ist.

16. Ventil nach Anspruch 15, **dadurch gekennzeichnet, dass** der Gehäuseträger (8) die Lagerstellen (10) des Drehklappen-Wellen-Verbundes (33) und den Dichtring (6) aufnimmt.

17. Ventil nach einem der Ansprüche 1 bis 16, **dadurch gekennzeichnet, dass** der Oszillator elektromagnetisch angetrieben wird.

18. Ventil nach Anspruch 17, **dadurch gekennzeichnet, dass** der elektromagnetische Antrieb (32) sich ganz oder teilweise im gasführenden Innenraum (31) des Ventils (9) befindet.

19. Ventil nach Anspruch 17 oder 18, **dadurch gekennzeichnet, dass** der elektromagnetische Antrieb (32) aus zwei Elektromagneten (18, 19) und einem mit dem Drehklappen-Wellen-Verbund (33) verbundenen ferromagnetischen Anker (7) besteht, wobei der Anker (7) wechselseitig von den Elektromagneten (18, 19) angezogen wird.

20. Ventil nach Anspruch 19, **dadurch gekennzeichnet, dass** der Anker (7) mit der Welle (1) einteilig aus ferromagnetischem Material hergestellt ist.

21. Ventil nach Anspruch 19 oder 20, **dadurch gekennzeichnet, dass** die Elektromagnete (18, 19) derart geformt sind, dass sie auf den Anker (7), in der Position der entspannten Feder (3) bei gemeinsamer Bestromung der Elektromagnete (18, 19), ein asymmetrisches Kraftmoment auf den Anker (7) ausüben und den Anker (7) somit in Richtung eines Vorzugsmagneten entsprechend einer Kennlinienbeeinflussung (26) ziehen.

## Claims

1. Gas carrying butterfly valve (30), in particular for use in a fresh gas or exhaust gas line in a thermal engine, with a drive (32), a shaft that can swivel in a carter (8) and a butterfly valve (2) connected with the shaft (1) and used for closing and opening a flow cross section of the carter (8), the thus formed butterfly valve-shaft compound structure (33) being designed as an oscillator that can be propelled by means of the drive (32) and wherein at least one spring (3) serves as energy storage means, a gas carrying internal space (31) being formed through the carter (8), **characterized in that** the spring (3) is situated at least partially in the gas carrying internal space (31) of the carter (8).

2. Valve according to claim 1, **characterized in that** the spring (3) is completely situated in the gas carrying internal space (31) of the carter (8).

3. Valve according to claim 1, **characterized in that** the carter (8) is formed by a carter support means (8a), which receives the butterfly valve - shaft compound structure (33), or by the carter support means (8a), and at least one gas carrying line (24, 25), subsequent to the carter support means (8a).

4. Valve according to one of the claims 1 to 3, **characterized in that** the spring (3) is designed as a torsion spring or as a twisted torsion spring.

5. Valve according to one of the claims 1 to 4, **characterized in that** one end (12) of the spring (3) is attached to the butterfly valve-shaft compound structure (33) and that the other end (11) of the spring (3) is connected to the carter (8), in particular to the carter supporting means (8a).

6. Valve according to claim 5, **characterized in that** the centre of gravitation of the spring end surface (12) in the area of which the spring (3) is attached to the butterfly valve-shaft compound structure (33), either traverses the rotation axis of the shaft (1) or is situated close to it, respectively, and that the centre of gravitation of the surface of the spring end (11) in the area of which the spring (3) is attached to the carter supporting means (8a), is situated further away from the turning axis than the spring end (12) in the area in which the spring (3) is attached to the butterfly valve-shaft compound structure (33).

7. Valve according to one of the claims 1 to 6, **characterized in that** the spring (3) is designed as a leaf spring.

8. Valve according to one of the claims 1 to 7, **characterized in that** the spring (3) has a variable spring cross section and/or that the spring cross section is rectangular, elliptical or polygonal and/or that the spring (3) itself is bent or twisted.

9. Valve according to one of the claims 1 to 8, **characterized in that** between the external peripheral surface (13) of the flap (2) and the internal wall of the carter, a tight throttle slit is formed.

10. Valve according to one of the claims 1 to 7, **characterized in that** when the valve (30) is closed, the external peripheral surface (13) of the flap (2) and the internal peripheral surface (14) of a sealing ring (6) form a tight throttle slit, wherein the sealing ring (6) is embedded in a mobile or fixed manner in the carter (8), in particular in the carter support means (8a) and also provides a seal with regard to those.

11. Valve according to one of the claims 1 to 10, **characterized in that** the flap (2) is flat and that the external peripheral surface (13) of the flap is circular.

12. Valve according to one of the claims 1 to 11, **characterized in that** the spring (3) does not cut across or interrupt the sealing slit between the flap (2) and the carter (8), in particular the carter supporting means (8a) and the sealing ring (6), respectively.

13. Valve according to one of the claims 1 to 12, **characterized in that** the flap (2) is attached to the shaft (1) in a position where, when a pressure difference occurs while the valve (30) is closed, no power transmission takes place between the flap (2) and the shaft (1).

14. Valve according to one of the claims 1 to 13, **characterized in that** the flap (2) and the shaft (1) are designed in one single piece.

15. Valve according to one of the claims 1 to 14, **characterized in that** in the area of the closing position of the valve (30) the internal shape of the carter (8), in particular of the carter support structure (8a) and of the internal peripheral surface (14) of the sealing ring (6), respectively, clings to the orbit of the external peripheral surface (13) of the flap (2) and thus reduces considerably the open slit between the flap (2) and the carter (8), in particular the carter supporting structure (8a) and the flap (2) and the sealing ring (6) situated close to the closing position.

16. Valve according to claim 15, **characterized in that** the carter supporting means (8) receives the bearing points (10) of the butterfly valve-shaft compound structure (33) as well as the sealing ring.

17. Valve according to one of the claims 1 to 16, **characterized in that** the oscillator has an electromagnetic drive.

18. Valve according to claim 17, **characterized in that** the electromagnetic drive (32) is situated either totally or partially in the gas carrying internal space (31) of the valve (9).

19. Valve according to claim 17 or 18, **characterized in that** the electromagnetic drive (32) consists of two electromagnets (18, 19) and of a ferromagnetic rotor (7) connected with the butterfly valve-shaft compound structure (33), the rotor (7) being attracted in turns by the electromagnets (18, 19).

20. Valve according to claim 19, **characterized in that** the rotor (7) and the shaft (1) are shaped in one single piece and are made from ferromagnetic material.

21. Valve according to claim 19 or 20, **characterized in that** the electromagnets (18, 19) are shaped such that they apply an asymmetrical force on the rotor (7) and thus pull the rotor (7) towards a preferential magnet in a way corresponding to the influence on the characteristic (26).

## Revendications

1. Vanne papillon (30) pour le transport de gaz, en particulier pour une utilisation dans un tuyau de gaz frais ou le tuyau d'échappement d'un moteur thermique, dotée d'un entraînement (32), d'un arbre (1) pivotant logé dans un boîtier (8) et un papillon (2) relié à l'arbre (1) pour la fermeture et l'ouverture d'une section transversale du canal du boîtier (8), l'ensemble papillon-arbre (33) constitué comme un oscillateur entraînable à l'aide de l'entraînement (32) dans lequel au moins un ressort (3) sert d'accumulateur d'énergie, et un espace intérieur transporteur de gaz (31) étant formé par le boîtier (8), **caractérisée en ce que** le ressort (3) se trouve au moins partiellement dans l'espace intérieur transporteur de gaz (31) du boîtier (8).

2. Valve selon la revendication 1, **caractérisée en ce que** le ressort (3) se trouve entièrement dans l'espace intérieur transporteur de gaz (31) du boîtier (8).

3. Valve selon la revendication 1, **caractérisée en ce que** le boîtier (8) est formé au moyen d'un support de boîtier (8a) qui héberge l'ensemble papillon-arbre (33), ou formé au moyen du support de boîtier (8a) et au moins d'un tuyau transporteur de gaz (24, 25) qui lui est connecté.

4. Valve selon les revendications de 1 à 3, **caractérisée en ce que** le ressort (3) est conçu comme un ressort de torsion ou comme un ressort de flexion hélicoïdal.

5. Valve selon l'une des revendications de 1 à 4, **caractérisée en ce que** le ressort (3) est fixé par une extrémité de ressort (12) à l'ensemble papillon-arbre (33) et relié par l'autre extrémité du ressort (11) au boîtier (8), en particulier au support de boîtier (8a).

6. Valve selon la revendication 5, **caractérisée en ce que** le centre de gravité de l'extrémité du ressort (12), dans la zone duquel le ressort (3) est fixé à l'ensemble papillon-arbre (33), coupe l'axe de rotation de l'arbre (1) ou plus exactement est situé près de ce dernier et l'extrémité de ressort (11), dans la zone de laquelle le ressort (3) est relié avec le boîtier (8), en particulier avec le support du boîtier (8a), est par son centre de gravité plus éloignée de l'axe de rotation que l'extrémité du ressort (12) dans la zone de laquelle le ressort (3) est fixé à l'ensemble papillon-arbre (33).

7. Valve selon l'une des revendications de 1 à 6, **caractérisée en ce que** le ressort (3) est construit comme un ressort à lames.

8. Valve selon l'une des revendications de 1 à 7, **caractérisée en ce que** le ressort (3) présente une section transversale de ressort variable et/ou le profil de la section transversale de ressort est construit rectangulaire, elliptique ou polygonal et/ou le ressort (3) est dévié dans lui-même ou bien tordu.

9. Valve selon l'une des revendications de 1 à 8, **caractérisée en ce que** dans l'état de fermeture de la valve (30), le clapet (2) forme avec la surface de son périmètre extérieur (13) et la paroi intérieure du boîtier une étroite fente d'étranglement.

10. Valve selon l'une des revendications de 1 à 7, **caractérisée en ce que** dans l'état de fermeture de la valve (30), le clapet (2) forme entre la surface du périmètre extérieur (13) et la surface du périmètre intérieur d'un anneau d'étanchéité (6) une étroite fente d'étranglement, l'anneau d'étanchéité (6) étant encastré de manière fixe ou mobile dans le boîtier (8), en particulier dans le support du boîtier (8a) de sorte qu' il y ait également étanchéité par rapport à ce dernier.

11. Valve selon l'une des revendications de 1 à 10, **caractérisée en ce que** le clapet (2) est plat et la surface du périmètre extérieur (13) du clapet (2) a une forme circulaire.

12. Valve selon l'une des revendications de 1 à 11, **caractérisée en ce que** le ressort (3) ne coupe pas ou n'interrompt pas un jeu d'étanchéité entre clapet (2) et boîtier (8), en particulier support du boîtier (8a), plus exactement anneau d'étanchéité (6).

13. Valve selon l'une des revendications de 1 à 12, **caractérisée en ce que** le clapet (2) est fixé sur l'arbre (1) dans une position de sorte qu'en cas d'écart de pression au niveau de la valve fermée (30) il n'y ait pas de transmission de couple de force du clapet (2) à l'arbre (1).

14. Valve selon l'une des revendications de 1 à 13, **caractérisée en ce que** le clapet (2) et l'arbre (1) sont réalisés d'une seule pièce.

15. Valve selon l'une des revendications de 1 à 14, **caractérisée en ce que** dans la zone de position de fermeture de la valve (30), le contour intérieur du boîtier (8), en particulier du support du boîtier (8a), c'est-à-dire la surface du périmètre intérieur (14) de l'anneau d'étanchéité (6) s'appuie contre la trajectoire des mouvements circulaires de la surface du périmètre extérieur(13) du clapet (2) et ainsi réduit fortement la fente d'ouverture entre clapet (2) et boîtier (8), en particulier le support du boîtier (8a), c'est-à-dire le clapet (2) et l'anneau d'étanchéité (6) près de la zone en position de fermeture.

16. Valve selon la revendication 15, **caractérisée en ce que** le support de boîtier (8) héberge les logements (10) de l'ensemble papillon-arbre (33) et de l'anneau d'étanchéité (6).

17. Valve selon l'une des revendications de 1 à 16, **caractérisée en ce que** le fonctionnement de l'oscillateur est électromagnétique.

18. Valve selon la revendication 16, **caractérisée en ce que** l'entraînement électromagnétique (32) se trouve entièrement ou partiellement dans l'espace intérieur transporteur de gaz (31) de la valve (9).

19. Valve selon la revendication 17 ou 18, **caractérisée en ce que** l'entraînement électromagnétique (32) est composé de deux électroaimants (18, 19) et d'un rotor ferromagnétique (7) reliée à l'ensemble papillon-arbre (33), le rotor (7) étant attir é tour à tour par les électroaimants (18, 19).

20. Valve selon la revendication 19, **caractérisée en ce que** le rotor (7) et l'arbre (1) sont fabriqués d'une seule pièce en matériau ferromagnétique.

21. Valve selon la revendication 16 ou 17, **caractérisée en ce que** les électroaimants (18, 19) sont formés de sorte qu'ils exercent, en position de ressort détendu (3) dans le cas de l'alimentation électrique commune des électroaimants (18, 19), un couple de force asymétrique sur le rotor (7) et ainsi tirent le rotor (7) dans la direction d'un aimant préférentiel correspondant à une influence sur les caractéristiques (26).
